# EUROPÄISCHE PATENTSCHRIFT

(11) **EP 3 740 446 B1**
(45) Veröffentlichungstag und Bekanntmachung des Hinweises auf die Patenterteilung: **10.11.2021**
(21) Anmeldenummer: 19700651.3
(22) Anmeldetag: 09.01.2019
(51) Int. Cl.: B65G 65/28, E02F 3/04

(54) **BÖSCHUNGSRÄUMUNGSSYSTEM UND VERFAHREN ZUM AUSSTAPELN VON SCHÜTTGUT EINER SCHÜTTGUTHALDE**
SLOPE CLEARING SYSTEM AND METHOD FOR REMOVING BULK MATERIAL FROM A BULK MATERIAL PILE
SYSTÈME DE DÉBLAIEMENT DE TALUS ET PROCÉDÉ DE DÉSEMPILAGE DE MATÉRIAUX EN VRAC D'UN MONTICULE DE MATÉRIAUX EN VRAC

(30) Priorität: 16.01.2018 DE 102018100820
(43) Veröffentlichungstag der Anmeldung: 25.11.2020
(73) Patentinhaber: thyssenkrupp Industrial Solutions AG, 45143 Essen (DE); thyssenkrupp AG, 45143 Essen (DE)
(72) Erfinder: SCHOLZ, Guido, 48291 Telgte (DE); SLAWINSKI, Bernd, 59227 Ahlen (DE); WESTMATTELMANN, Ralf, 59302 Oelde (DE); SCHLAMANN, Guido, 59320 Ennigerloh (DE)
(74) Vertreter: thyssenkrupp Intellectual Property GmbH
(86) Internationale Anmeldenummer: PCT/EP2019/050406
(87) Internationale Veröffentlichungsnummer: WO 2019/141558

(56) Entgegenhaltungen:
- DE-A1-102012 217 011
- DE-B- 1 229 911

## Beschreibung

Die Erfindung betrifft ein Böschungsräumungssystem und ein Verfahren zum Ausstapeln von Schüttgut einer Schüttguthalde.

In vielen industriellen Verfahren, wie beispielsweise in der Zementindustrie, kommt es bei der Herstellung von Produkten entscheidend auf die Gleichmäßigkeit der eingesetzten Rohstoffe an. Hierfür werden vielfach Schüttguthalden eingesetzt, mit denen ein Mischen und Homogenisieren des Schüttgutes ermöglicht wird. Zum Ausstapeln des Schüttguts kommen sogenannte Böschungsräumungssysteme zum Einsatz, die eine verschiebbare Brücke aufweisen, wobei wenigstens ein Rechen vorgesehen ist, der zum Abtragen des Schüttguts in Eingriff mit einer Anschnittfläche der Schüttguthalde kommt und längst der Brücke verfahrbar ist. Jeder Rechen weist dabei eine Vielzahl von Aktivierungselementen, beispielsweise Zähne, auf, die im Bereich der Anschnittfläche in das Schüttgut eindringen und dieses dabei lösen, sodass es über die Anschnittfläche nach unten fließt, wo es abtransportiert wird. Derartige Böschungsräumungssysteme sind beispielsweise aus der DE 1 983 486 U und der SU 1 237 589 A1 bekannt.

Die DE 1229 911 B offenbart ein Haldenräumgerät, bei dem an einen Ausleger ein Kratzgerät befestigt ist, das als zweiteiliger Rechen mit Zinken ausgebildet ist. Die Rechenteile sind mittels eines Antriebs in horizontaler Ebene bewegbar, wobei der Hub der einzelnen Rechenteile bis zu 1 m betragen kann. Weiterhin ist aus der DE 10 2012 217 011 A1 eine Vorrichtung zum kontinuierlichen Haldenabtrag mit zwei Rechen bekannt, die pendelnd über parallele Koppelfelder an einer Maschinenstruktur befestigt sind, wobei zwischen den beiden Rechen ein Antrieb angeordnet ist, der die Rechen eine parallelgeführte, synchrone und gegenläufige kreisförmige Pendelbewegung ausführen lässt.

Aus der DE 28 56 182 A1 ist ein Brückengerät zum Abtragen einer Schüttguthalde bekannt. Das Brückengerät weist eine Lösevorrichtung auf, die an der der Halde zugewandten Seite mit einer Reihe von übereinander angeordneten, über ihre ganze Höhe verteilten Kontakt-Anzeigern bestückt ist und mit einem die Schaufelrad-Bewegungen steuernden Rechner verbunden sind. DE 28 56 182 A1 offenbart ein Böschungsräumungssystem nach dem Oberbegriff des Anspruchs 1.

Aufgrund der sich wandelnden Kundenanforderungen werden Mischbetten heutzutage vermehrt für Premix (Kalkstein-Ton-Gemische) eingesetzt. Hervorgerufen durch den Tonanteil verschlechtern sich jedoch die Handlingeigenschaften des Schüttgutes erheblich. Um dies zu kompensieren werden üblicherweise zwei Maßnahmen getroffen, um dennoch eine ausreichende Performance des Böschungsräumungssystems zu gewährleisten:
a. Bezogen auf jedes Aktivierungselement (beispielsweise jeden Zahn eines Rechens) wird eine höhere Aktivierungsenergie zur Verfügung gestellt, sodass eine höhere Grabkraft pro Zahn gewährleistet ist.
b. Die Anzahl der Aktivierungselemente (Zähne am Rechen) wird erhöht, um die gesunkene Ausstapelleistung pro Aktivierungselement zu kompensieren.

Dies hat aber zufolge, dass die Fläche eines Rechens deutlich vergrößert wird, um die Anzahl der Aktivierungselemente zu erhöhen, was wiederum für jeden Rechen eine sehr große Antriebsleistung (= Aktivierungsleistung) erfordert. Ein großer Rechen mit einer hohen Antriebskraft kann jedoch bei einem Schüttgut, das in der Anschnittfläche unterschiedliche Handlingeigenschaften aufweist bzw. über die gesamte Fläche sehr schlechte Handlingeigenschaften aufweist, folgendes Problem hervorrufen. Durch Kompaktion, lokale Feuchten, etc. kann es lokal zu einer Verfestigung des Schüttgutes in der Anschnittsfläche kommen. Versuchen nun ein oder mehrere Aktivierungselemente diesen Bereich zu "durchschneiden", entstehen Reaktionskräfte, die dieser Bewegung entgegenwirken. Diese lokal auftretenden Reaktionskräfte werden durch die installierte gesamte Antriebsleistung begrenzt. Folglich kann es passieren, dass der Rechen lokal mit der gesamten Antriebskraft beansprucht wird, wodurch hohe mechanische Spannungen in der Rechenstruktur und im Rechenwagen, der für die Bewegung des Rechens zuständig ist, auftreten. Dies führt zu Ermüdungen und letztendlich zum Versagen der Strukturen. Eine entsprechend ausreichende Dimensionierung der betroffenen Strukturen ist aber wirtschaftlich nicht vertretbar, da es sich um flächenmäßig sehr große Bauteile (bis zu 550 m² und mehr) handelt.

Infolge der hohen Kräfte kann es zu Schweißnahtrissen kommen, was einen hohen Instandhaltungsaufwand bei der Kontrolle der Struktur und der Reparatur der Risse erfordert. Dies wiederum hat hohe Instandhaltungskosten und Produktionsausfallzeiten zufolge, wodurch die Performance des Böschungsräumungssystems sinkt und die Unzufriedenheit des Kunden steigt.

Der Erfindung liegt daher die Aufgabe zugrunde, die oben geschilderte Problematik zu vermeiden und insbesondere ein Böschungsräumungssystem anzugeben, welches unter wirtschaftlichen Gesichtspunkten robust genug ausgebildet ist, um auch Schüttgut mit unterschiedlichen bzw. sehr schlechten Handlingeigenschaften ausstapeln zu können.

Erfindungsgemäß wird diese Aufgabe durch die Merkmale der Ansprüche 1 und 8 gelöst.

Das erfindungsgemäße Böschungsräumungssystem zum Ausstapeln von Schüttgut einer Schüttguthalde weist eine verschiebbare Brücke auf, wobei wenigstens ein erster und ein zweiter Rechen vorgesehen sind, die zum Eingriff mit einer Anschnittfläche der Schüttguthalde nebeneinander angeordnet und längst der Brücke entlang wenigstens einer Verfahrstrecke verfahrbar sind und jeder Rechen mit einem separat ansteuerbaren Rechenantrieb zum Verfahren der Rechen ausgestattet ist und zur Ermittlung der Positionen der beiden Rechen zueinander und/oder zur Ermittlung der Positionen der Rechen auf der wenigstens einen Verfahrstrecke ein Positionsermittlungssystem vorgesehen ist.

Bei einem Verfahren zum Ausstapeln von Schüttgut einer Schüttguthalde kommen wenigstens zwei nebeneinander an einer verschiebbaren Brücke angeordnete Rechen in Eingriff mit einer Anschnittfläche der Schüttguthalde. Jeder Rechen wird dabei über einen separat ansteuerbaren Rechenantrieb in Längsrichtung der Brücke auf wenigstens einer Verfahrstrecke der Brücke verfahren und die Positionen der beiden Rechen zueinander und/oder die Positionen der beiden Rechen auf der wenigstens einen Verfahrstrecke ermittelt und zur Ansteuerung der beiden Rechenantreibe verwendet werden.

Durch die erfindungsgemäße Ausgestaltung kann die installierte Antriebsleistung auf mehrere Rechen aufgeteilt werden, sodass die maximal einwirkende Reaktionskraft der Schüttguthalde um den Faktor der eingesetzten Rechen reduziert wird. Zudem wird der mögliche Kraftfluss von einem Aktivierungselement eines Rechens über den Rechen und dem Rechenwagen entsprechend verkürzt. Auf diese Weise wird die Belastung auf die Struktur des Rechens zum einen durch die Reduzierung der mechanischen Spannungen (Reduzierung der wirkenden Maximalkraft um den Faktor der Anzahl der Rechen) und die Erhöhung der ertragbaren zulässigen mechanischen Spannungen (Reduzierung der zu ertragenen Lastwechsel durch Verkürzung des Kraftflusses) reduziert.

Durch diese beiden Effekte können die Rechen und der zugehörige Rechenwagen deutlich leichter ausgeführt werden, insgesamt ergibt sich auch eine kompaktere Struktur. Dies wiederum bietet die Möglichkeit auf deutlich kleinere Stahlprofile zurückgreifen zu können, um eine ähnlich steife Struktur zu erzeugen. Hierdurch wird das erforderlich Stahlbaugewicht und die Herstellungskosten reduziert.

Weitere Ausgestaltungen der Erfindung sind Gegenstand der Unteransprüche.

Gemäß einer bevorzugten Ausgestaltung der Erfindung ist jeweils der gesamte erste und der gesamte zweite Rechen translatorisch längs der Brücke verfahrbar, dazu können an der Brücke eine gemeinsame Verfahrstrecke oder zwei separate Verfahrstrecken vorgesehen werden.

Weiterhin können die beiden separaten Rechenantriebe mit einem Sensor zur Ermittlung der Leistungsaufnahme versehen sein. Eine ggf. vorgesehene Steuer- und

Regelungseinrichtung, die mit den beiden Sensoren zur Auswertung der ermittelten Leistungsaufnahmen verbunden ist, steht wahlweise mit den beiden Rechenantrieben und/oder mit einem Brückenantrieb zum Verfahren der Brücke in Verbindung, um die Geschwindigkeit der beiden Rechen bzw. der Brücke an die ermittelten Leistungsaufnahmen der beiden Rechenantriebe anzupassen. Diese Maßnahmen dienen zum Schutz des Böschungsräumungssystems, um die Belastung des Böschungsräumsystems rechtzeitig zu begrenzen.

Außerdem ist es denkbar, dass die beiden Rechen mit unterschiedlichen Geschwindigkeiten betrieben werden, sodass auch der Abstand zueinander verändert werden kann. Durch das Positionsermittlungssystem ist es möglich, die Geschwindigkeit eines Rechens relativ zur Geschwindigkeit des anderen Rechens in Abhängigkeit des Abstandes der beiden Rechen zueinander anzupassen. Außerdem wird auf diese Weise eine Kollision der beiden Rechen zuverlässig vermieden.

Die oben beschriebenen Böschungsräumungssysteme können sowohl bei einem Längsmischbett als auch bei einem Rundmischbett zur Anwendung kommen. Sowohl das Längs- als auch das Rundmischbett dienen zur Lagerung und Homogenisierung von Rohmaterialkomponenten, wie Kalkstein, Kalkstein/Mergel/Ton-Gemische, Ton oder Kohle. Längsmischbetten haben den Vorteil, dass diese im Vergleich zu Rundmischbetten verlängert werden können und das beim Aufbau der Halden mit dem letzten, gezielt eingestapelten Material die genaue chemische Zusammensetzung der Halde erreicht werden kann, wodurch eine höhere Flexibilität beim Betrieb des vorgelagerten Steinbruchs erreicht werden kann.

Rundmischbetten stellen aber eine kompaktere und kostensparendere Lösung dar. Die Kostenersparnis sind vor allem durch eine günstigere Halle, kürzere Förderwege und geringeren Investitionen für die Maschinen- und Elektroausrüstung begründet. Während bei Längsmischbetten zwei Halden vorgesehen sind, gibt es bei Rundmischbetten keinen Haldenwechsel, wodurch sich auch keine Sprünge in der chemischen Zusammensetzung des ausgestapelten Materials ergeben. Zudem ist es möglich, aus dem Rundmischbett ohne entsprechende Mühlenvorbunker direkt die Mühle zu beschicken. Rundmischbetten erlauben zudem, bezogen auf die Grundfläche, einen höheren Lagervorrat im Vergleich zur Längsausführung.

Konkrete Ausführungsbeispiele für diese beiden Anwendungen werden anhand der nachfolgenden Beschreibung und der Zeichnung näher erläutert.

### In der Zeichnung zeigen

- Fig. 1: eine Draufsicht des Böschungsräumungssystems eines Längsmischbetts,
- Fig. 2: eine Schnittdarstellung längs der Linie B-B der Fig. 1,
- Fig. 3: eine Detailansicht im Bereich eines Rechenantriebs,
- Fig. 4: eine schematische Schnittdarstellung eines Rundmischbetts,
- Fig. 5: eine Schnittdarstellung längs der Linie A-A der Fig. 4 und
- Fig. 6: ein Blockschaltbild der Steuer- und Regelungseinrichtung.

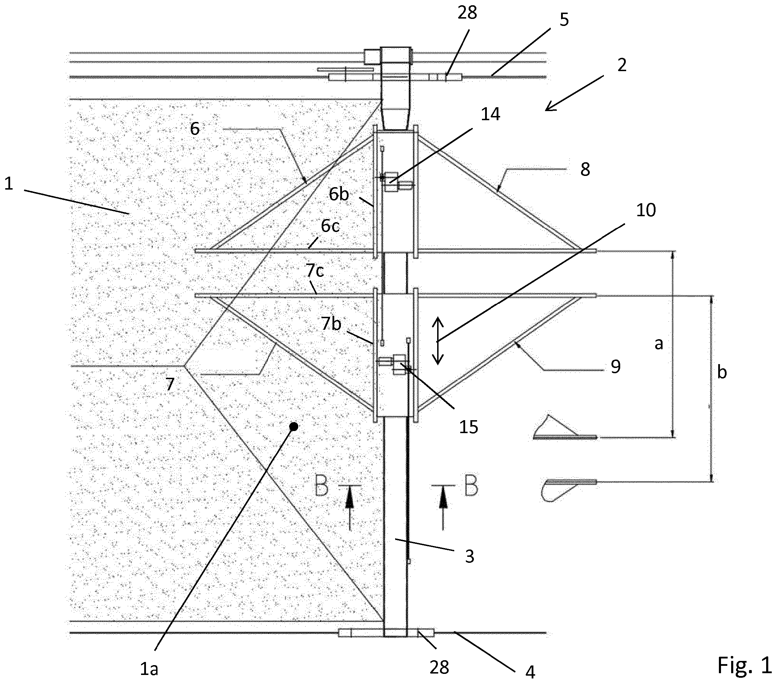

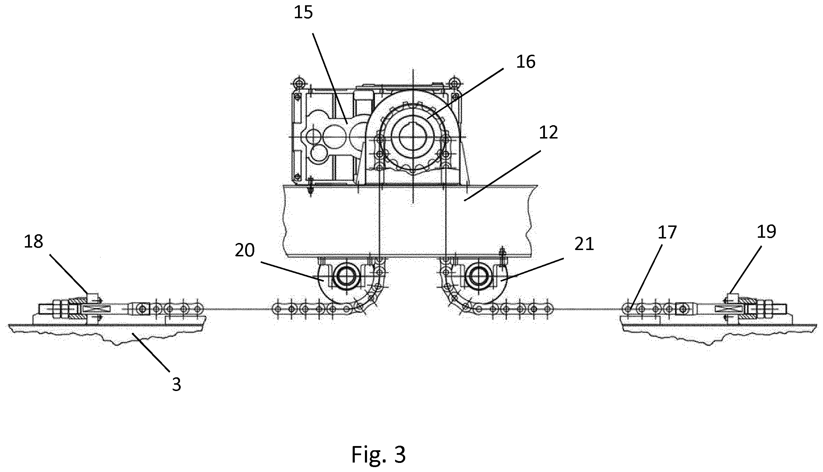

In den Figuren 1 und 3 wird ein erstes Ausführungsbeispiel eines erfindungsgemäßen Böschungsräumungssystems 2 gezeigt, das in einem Längsmischbett zur Anwendung kommt. Längsmischbetten bestehen aus zwei Schüttguthalden, wobei das Material mit Hilfe eines Absetzers in eine Schüttguthalde eingelagert und aus der anderen, hier dargestellten Schüttguthalde 1 mit Hilfe des Böschungsräumungssystems 2 ausgestapelt wird. Dabei können Einstapelleistungen von bis zu 2500 t/h und mehr und Ausstapelleistungen von bis zu 1200 t/h und mehr erreicht werden. Durch das Längsmischbett wird ein hoher Misch- und Vergleichmäßigungseffekt erreicht.

Das Böschungsräumungssystem 2 weist eine Brücke 3 auf, die auf zwei parallelen Schienen 4, 5 mit Hilfe eines Brückenantriebs 28 in beide Richtungen verfahrbar ist. Auf der der Schüttguthalde 1 zugewandten Seite der Brücke 3 sind ein erster Rechen 6 und ein zweiter Rechen 7 zum Eingriff mit einer Anschnittfläche 1a der Schüttguthalde 1 nebeneinander angeordnet und längs der Brücke 3, d. h. in Richtung des Doppelpfeils 10 verfahrbar. Auf der gegenüberliegenden Seite der Brücke 3 sind ein dritter Rechen 8 und ein vierter Rechen 9 vorgesehen, die dann zum Einsatz kommen, wenn die zweite, hier nicht dargestellte Schüttguthalde, ausgestapelt werden soll.

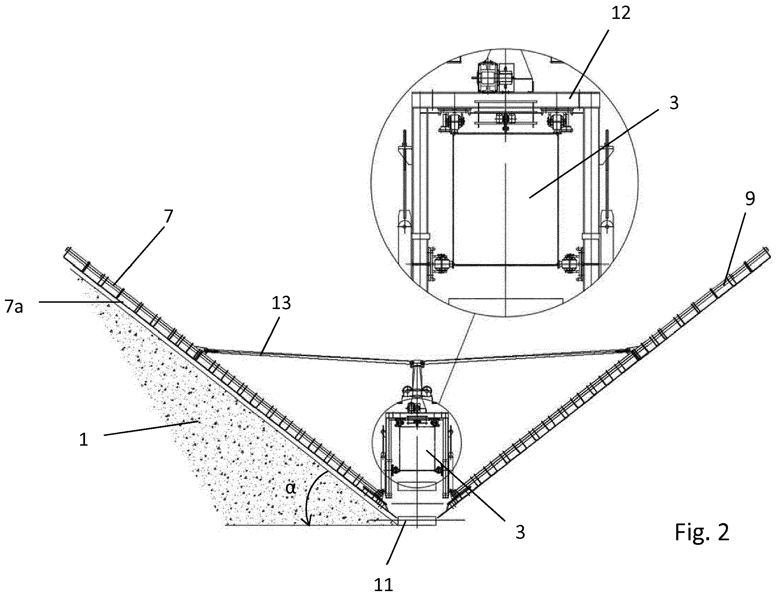

Die Schüttguthalde 1 erstreckt sich in ihrer Breite zwischen den beiden Schienen 4 und 5. Der Querschnitt bildet ein gleichschenkliges Dreieck, sodass sich auch für die Anschnittfläche 1a eine um einen Böschungswinkel α geneigte, gleichschenklige Dreieckfläche ergibt, wie dies aus den Figuren 1 und 2 zu ersehen ist. Der erste und zweite Rechen 6, 7 kommen mit ein und derselben Anschnittfläche 1a zum Ausstapeln des Schüttguts in Eingriff. Die beiden Rechen 6, 7 sind auf der der Anschnittfläche 1a zugewandten Seite mit Aktivierungselementen 7a ausgestattet, die beispielsweise durch Zähne, Haken oder Bügel gebildet werden und in das Schüttgut im Bereich der Anschnittfläche 1a eindringen, sodass das Schüttgut auf der schrägen Anschnittfläche 1a nach unten fließt, wo es über eine Fördereinrichtung 11 abtransportiert und beispielsweise einer Mühle zugeführt wird.

Jeder der beiden Rechen 6, 7 verfügt über einen Rechenwagen 12, der längs (Doppelpfeil 10) der Brücke 3 verfahrbar ist, wie dies aus dem Detail der Fig. 2 ersichtlich ist. Der erste Rechen 6 kommt dabei im Wesentlichen mit einem Teil der Anschnittfläche 1a und der zweite Rechen 7 mit dem anderen Teil der Anschnittfläche 1a in Wirkeingriff. Im Mittelbereich der Anschnittfläche 1a, in dem auch das meiste Material angeordnet ist, überlappen sich die Eingriffsbereiche der beiden Rechen 6, 7, was sich unmittelbar aus den beiden Verfahrwegen a, b gemäß Fig. 1 ergibt. Die beiden Rechen 6, 7 sind hier ebenfalls dreieckförmig ausgebildet, und weisen zwei rechtwinklig zueinander stehende Schenkel 7b, 7c aufweist, wobei der Schenkel 7b parallel zur Brücke 3 ausgerichtet ist und der Schenkel 7c bis etwa zur Spitze der Anschnittfläche 1a reicht. Der erste Rechen 6 weist entsprechend ausgebildete Schenkel 6b und 6c auf. Die beiden Rechen 6, 7 sind dabei mit ihren beiden längeren Schenkel 6c und 7c einander zugewandt.

Die Fläche jedes Rechens ist kleiner als 40% der Anschnittfläche, insbesondere kleiner als 30%. Da die beiden Rechen 6, 7 jedoch längs der Brücke 3 verfahrbar sind, kommen die Aktivierungselemente der beiden Rechen mit der gesamten Anschnittfläche 1a in Wirkeingriff.

Die Rechen 6 bis 9 werden mit Hilfe von Seilzügen 13 so fixiert, dass sich für die Anschnittfläche 1a der gewünschte Böschungswinkel α ergibt. Der erste Rechen 6 und der zweite Rechen 7, die mit der Anschnittfläche 1a der Schüttguthalde in Wirkeingriff, insbesondere in gleichzeitigen Wirkeingriff kommen, weisen jeweils einen separaten Rechenantrieb 14, 15 auf. Aus Fig. 3 ist zu entnehmen, dass die Rechenantriebe, hier der Rechenantrieb 15 jeweils auf einem zugehörigen Rechenwagen 12 angeordnet sind. Der Rechenantrieb 15 wird beispielsweise durch einen Elektromotor gebildet, der ein Ritzel 16 antreibt, das mit einer längs der Brücke 3 verlegten Kette 17 zusammenwirkt. Die Kette ist lediglich an ihren Endpunkten über Befestigungen 18 und 19 an der Brücke 3 fixiert und ist ansonsten lose. Im Bereich des Rechenwagens 12 wird die Kette über Umlenkungen 20, 21 über das Ritzel 16 geführt. Je nach Drehrichtung des Rechenantriebs 15 bewegt sich dann der Rechenwagen 12 in die eine bzw. andere Richtung. Natürlich sind im Rahmen der Erfindung auch andere Antriebssysteme denkbar. So könnte ein am Rechenwagen vorgesehenes Ritzel auch direkt in eine auf der Brücke verlegten Kettenschiene eingreifen.

Durch die beiden separaten Rechenantriebe 14, 15 kann der erste und zweite Rechen 6, 7 unabhängig voneinander bewegt werden, wodurch unterschiedlichen Geschwindigkeiten und auch unterschiedlicher Richtungen eingestellt werden können.

Das in Fig. 1 dargestellte Böschungsräumungssystem weist nicht nur die beiden Rechen 6, 7, sondern auf der gegenüberliegenden Seite auch den dritten und vierten Rechen 8, 9 auf. Diese beiden Rechen kommen dann zum Einsatz, wenn die andere, nicht näher dargestellte Schüttguthalde abgetragen werden soll. Es sind somit entweder der erste und zweite Rechen 6, 7 oder der dritte und vierte Rechen 8, 9 im Einsatz. Es ist daher von Vorteil, wenn der erste Rechen 6 und der dritte Rechen 8 auf einem gemeinsamen Rechenwagen 12 befestigt sind. In entsprechender Weise bilden auch der zweite Rechen 7 und der vierte Rechen 9 ein entsprechendes Pärchen. Entscheidend ist jedoch, dass die zwei auf einer Seite der Brücke angeordneten Rechen, welche mit ein und derselben Anschnittfläche 1a in Wirkkontakt kommen, mit separaten Rechenantrieben 14, 15 ausgestattet sind.

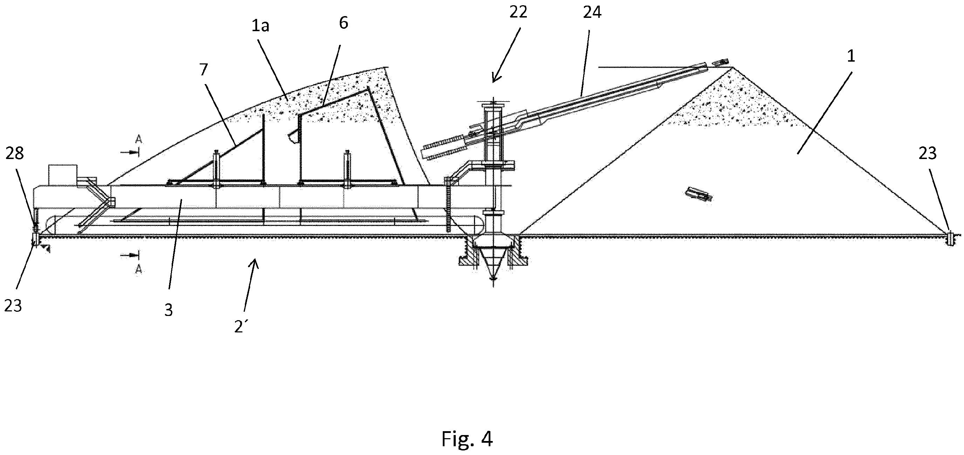

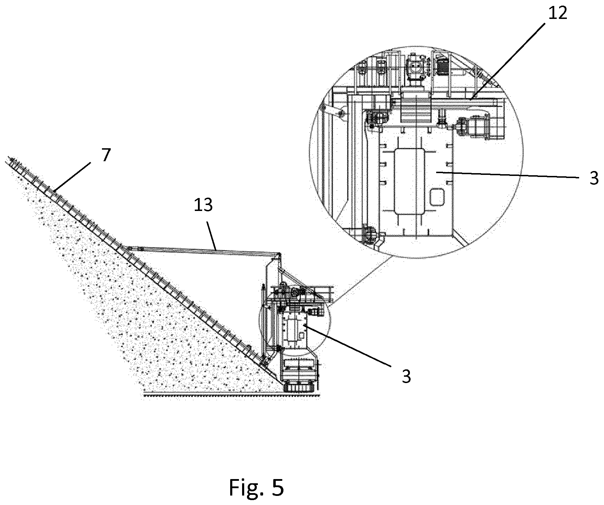

In den Figuren 4 und 5 wird ein zweites Ausführungsbeispiel beschrieben, welches ein Rundmischbett zeigt. Bei einem Rundmischbett gibt es keinen Haldenwechsel, da die Schüttguthalde 1, kreisförmig um eine Zentralsäule 22 angelegt wird. Das Böschungsräumungssystem 2' des Rundmischbetts ist aber relativ ähnlich zum Böschungsräumungssystem 2 des Längsmischbettes aufgebaut. Es werden daher für gleiche Bauteile dieselben Bezugszeichen verwendet.

Die Brücke 3 ist hier mit einem Ende mit einer Zentralsäule 22 verbunden und stützt sich an ihrem äußeren Ende auf einer kreisförmigen Schiene 23 ab. Ansonsten sind in übereinstimmender Weise ein erster Rechen 6 und ein zweiter Rechen 7 vorgesehen, die längs der Brücke 3 in übereinstimmender Weise zum ersten Ausführungsbeispiel befahrbar sind. So ist jeder Rechen 12 an einem Rechenwagen 12 montiert, der längs der Brücke 3 befahrbar ist. Außerdem ist in übereinstimmender Weise zum ersten Ausführungsbeispiel jeder der beiden Rechen 6, 7 mit einem separaten Rechenantrieb 14, 15 versehen. Insofern kann insbesondere auf die Fig. 3 verwiesen werden.

Neben dem Böschungsräumungssystem 2' zeigt die Fig. 4 auch einen Absetzer 24, mit dem das Material in die Schüttguthalde 1 eingestapelt wird.

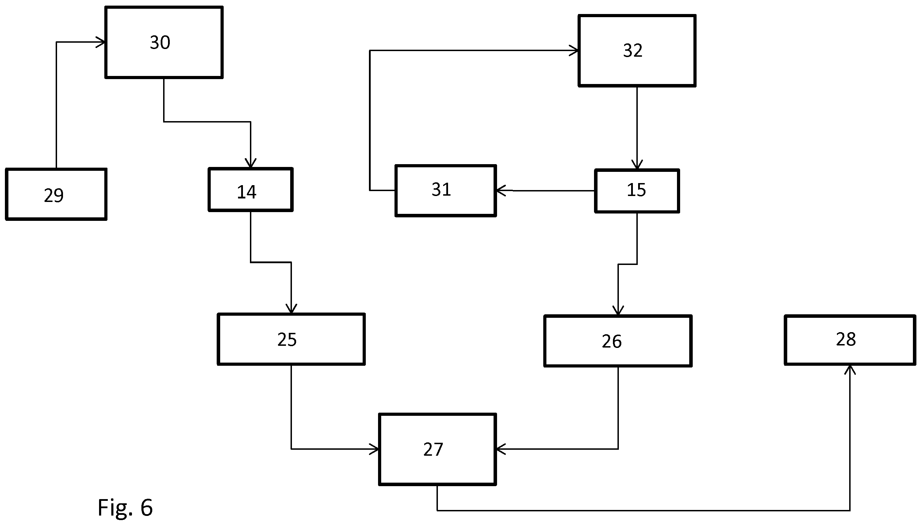

Die Böschungsräumungssysteme 2, 2' weisen zudem ein Steuerungs- und Regelungskonzept auf, mit denen die Ausstapelleistung der Böschungsräumungssystems 2, 2' den Materialbedingungen angepasst werden können, um so einen aktiven Maschinenschutz zu bilden. Dieses Steuerung- und Regelungskonzept wird anhand der Fig. 6 im Folgenden näher erläutert.

Der erste Rechenantrieb 14 weist einen ersten Sensor 25 zur Ermittlung seiner Leistungsaufnahme auf. In entsprechender Weise ist auch der zweite Rechenantrieb 15 mit einem zweiten Sensor 26 zur Ermittlung der Leistungsaufnahme in Wirkkontakt. Die Messwerte diese beiden Sensoren 25, 26 werden in einer Steuer- und Regelungseinrichtung 27 ausgewertet, wobei bei Überschreitung einer vorgegebenen Obergrenze der Vorschub der Brücke 3 über den Brückenantrieb 28 entsprechend verringert wird. Eine erhöhte Leistungsaufnahme bei einem oder beiden Rechenantrieben 14, 15 kann beispielsweise dadurch entstehen, dass ein mit dem Rechen gerade bearbeiteter Böschungsbereich der Anschnittfläche 1a verfestigt ist. Durch die Reduzierung der Vorschubgeschwindigkeit reduziert sich auch die Ausstapelleistung bis der verfestigte Böschungsbereich abgetragen wurde. Sinkt die Antriebsleistung des betroffenen Rechenantriebs wieder, so wird über die Steuer- und Regelungseinrichtung die Brückenvorschubgeschwindigkeit wieder erhöht, um den geforderten Ausstapeldurchsatz zu erreichen. Durch die Anpassung der Ausstapelleistung des Böschungsräumungssystems an die Materialbedingungen wird ein aktiver Maschinenschutz gewährleistet.

Des Weiteren kann der Rechenwagen 12 des ersten Rechens 6, welcher dem ersten Rechenantrieb 14 zugeordnet ist, mit Endschaltern 29 versehen sein, die mit einer Motorsteuerung 30 zusammenwirkt, sodass bei Erreichen der Endlage die Bewegungsrichtung des zugehörigen Rechenwagens über den Rechenantrieb 14 umgekehrt wird. Damit der erste und zweite Rechen 6, 7 bzw. deren für den Rechenantrieb zuständige Bauteile nicht miteinander kollidieren, kann wenigstens ein Abstandssensor 31 vorgesehen werden, der mit einer Regelung 32 die Geschwindigkeit des zweiten Rechenantriebs 15 entsprechend anpasst.

## Patentansprüche

1. Böschungsräumungssystem (2, 2') zum Ausstapeln von Schüttgut einer Schüttguthalde (1) mit einer verschiebbaren Brücke, wobei wenigstens ein erster und ein zweiter Rechen (6, 7) vorgesehen sind, die zum Eingriff mit einer Anschnittfläche (1a) der Schüttguthalde (1) nebeneinander angeordnet und längs der Brücke (3) entlang wenigstens einer Verfahrstrecke verfahrbar sind,
**dadurch gekennzeichnet, dass** jeder Rechen (6, 7) mit einem separat ansteuerbaren Rechenantrieb (14, 15) zum Verfahren der Rechen (6, 7) ausgestattet ist und zur Ermittlung der Positionen der beiden Rechen (6, 7) zueinander und/oder zur Ermittlung der Positionen der Rechen (6, 7) auf der wenigstens einen Verfahrstrecke ein Positionsermittlungssystem vorgesehen ist.

2. Böschungsräumungssystem (2, 2') nach Anspruch 1, **dadurch gekennzeichnet, dass** jeweils der gesamte erste und der gesamte zweite Rechen (6, 7) translatorisch längs der Brücke (3) verfahrbar ist.

3. Böschungsräumungssystem (2, 2') nach Anspruch 1, **dadurch gekennzeichnet, dass** jeder der beiden separaten Rechenantriebe (14, 15) mit einem Sensor (25, 26) zur Ermittlung der Leistungsaufnahme versehen ist.

4. Böschungsräumungssystem nach Anspruch 3, **dadurch gekennzeichnet, dass** eine Steuer- und Regelungseinrichtung (27) vorgesehen ist, die mit den beiden Sensoren (25, 26) zur Auswertung der ermittelten Leistungsaufnahmen der beiden Rechenantriebe (14, 15) verbunden ist.

5. Böschungsräumungssystem (2, 2') nach Anspruch 4, **dadurch gekennzeichnet, dass** zum Verfahren der Brücke (3) ein Brückenantrieb (28) vorgesehen ist, der mit der Steuer- und Regelungseinrichtung (27) zur Anpassung der Geschwindigkeit der Brücke (3) in Abhängigkeit der ermittelten Leistungsaufnahmen der beiden Rechenantriebe (14, 15) in Verbindung steht.

6. Böschungsräumungssystem (2, 2') nach Anspruch 4, **dadurch gekennzeichnet, dass** die beiden Rechenantriebe (14, 15) mit der Steuer- und Regelungseinrichtung (27) zur Anpassung der Geschwindigkeit wenigstens eines der beiden Rechenantriebe (14, 15) in Abhängigkeit der ermittelten Leistungsaufnahme dieses Rechenantriebs (14, 15) in Verbindung steht.

7. Verfahren zum Ausstapeln von Schüttgut einer Schüttguthalde, wobei wenigstens zwei nebeneinander an einer verschiebbaren Brücke (3) angeordnete Rechen (6, 7) beim Ausstapeln von Schüttgut der Schüttguthalde in Eingriff mit einer Anschnittfläche (1a) der Schüttguthalde (1) kommen und in Längsrichtung der Brücke (3) auf wenigstens einer Verfahrstrecke der Brücke (3) verfahren werden,
**dadurch gekennzeichnet, dass** jeder Rechen (1, 7) über einen separat ansteuerbaren Rechenantrieb (14, 15) in Längsrichtung der Brücke (3) verfahren wird und die Positionen der beiden Rechen (6, 7) zueinander und/oder die Positionen der beiden Rechen (6, 7) auf der wenigstens einen Verfahrstrecke ermittelt und zur Ansteuerung der beiden Rechenantreibe (14, 15) verwendet werden.

8. Verfahren nach Anspruch 7, **dadurch gekennzeichnet, dass** die Leistungsaufnahme der beiden Rechenantriebe (14, 15) ermittelt und ausgewertet wird.

9. Verfahren nach Anspruch 7, **dadurch gekennzeichnet, dass** die Brücke (3) mit einer Vorschubgeschwindigkeit verschiebbar ist, die in Abhängigkeit der ausgewerteten Leistungsaufnahmen der beiden Rechenantriebe (14, 15) geregelt wird.

10. Verfahren nach Anspruch 7, **dadurch gekennzeichnet, dass** die Geschwindigkeit wenigstens eines Rechens (6, 7) an die gemessene Leistungsaufnahme dieses Rechens (14, 15) angepasst wird.

11. Verfahren nach Anspruch 7, **dadurch gekennzeichnet, dass** die Geschwindigkeit eines Rechens (6) relativ zur Geschwindigkeit des anderen Rechens in Abhängigkeit des Abstandes der beiden Rechen (6, 7) zueinander angepasst wird.

## Claims

1. Slope clearing system (2, 2') for removing bulk material from a bulk material pile (1), having a movable bridge, wherein at least a first and a second rake (6, 7) are provided, which, for engagement with a cutting surface (1a) of the bulk material pile (1), are arranged next to each other and can be moved along at least one path of movement along the bridge (3),
**characterized in that** each rake (6, 7) is equipped with a separately controllable rake drive (14, 15) for moving the rakes (6, 7) and a position determining system is provided for determining the positions of the two rakes (6, 7) in relation to each other and/or for determining the positions of the rakes (6, 7) on the at least one path of movement.

2. Slope clearing system (2, 2') according to Claim 1, **characterized in that** in each case the entire first rake (6) and the entire second rake (7) can be moved translationally along the bridge (3).

3. Slope clearing system (2, 2') according to Claim 1, **characterized in that** each of the two separate rake drives (14, 15) is provided with a sensor (25, 26) for determining the power consumption.

4. Slope clearing system according to Claim 3, **characterized in that** an open-loop and closed-loop control device (27) is provided, which is connected to the two sensors (25, 26) for evaluating the determined power consumptions of the two rake drives (14, 15).

5. Slope clearing system (2, 2') according to Claim 4, **characterized in that** a bridge drive (28) is provided for moving the bridge (3) and is in connection with the open-loop and closed-loop control device (27) for adapting the speed of the bridge (3) in dependence on the determined power consumptions of the two rake drives (14, 15).

6. Slope clearing system (2, 2') according to Claim 4, **characterized in that** the two rake drives (14, 15) are in connection with the open-loop and closed-loop control device (27) for adapting the speed of at least one of the two rake drives (14, 15) in dependence on the determined power consumption of this rake drive (14, 15).

7. Method for removing bulk material from a bulk material pile, wherein, during the removal of bulk material from the bulk material pile, at least two rakes (6, 7) arranged next to each other on a movable bridge (3) engage with a cutting surface (1a) of the bulk material pile (1) and are moved on at least one path of movement of the bridge (3) in the longitudinal direction of the bridge (3),
**characterized in that** each rake (1, 7) is moved by means of a separately controllable rake drive (14, 15) in the longitudinal direction of the bridge (3) and the positions of the two rakes (6, 7) in relation to each other and/or the positions of the two rakes (6, 7) on the at least one path of movement are determined and used for controlling the two rake drives (14, 15).

8. Method according to Claim 7, **characterized in that** the power consumption of the two rake drives (14, 15) is determined and evaluated.

9. Method according to Claim 7, **characterized in that** the bridge (3) can be moved at an advancing speed which is controlled in dependence on the evaluated power consumptions of the two rake drives (14, 15).

10. Method according to Claim 7, **characterized in that** the speed of at least one rake (6, 7) is adapted to the measured power consumption of this rake (14, 15).

11. Method according to Claim 7, **characterized in that** the speed of one rake (6) in relation to the speed of the other rake is adapted in dependence on the distance of the two rakes (6, 7) from each other.

## Revendications

1. Système de déblayage (2, 2') destiné au désempilage de matériaux en vrac d'un dépôt de matériaux en vrac (1) et comprenant un pont mobile, au moins un premier et un deuxième râteau (6, 7) étant prévus qui sont disposés l'un à côté de l'autre pour s'engager avec une surface d'attaque (1a) du dépôt de matériaux en vrac (1) et pouvant être déplacés le long du pont (3) suivant au moins un chemin de déplacement, **caractérisé en ce que** chaque râteau (6, 7) est équipé d'un entraînement de râteau (14, 15) pouvant être commandé séparément et destiné à déplacer le râteau (6, 7) et un système de détermination de position est prévu pour déterminer les positions des deux râteaux (6, 7) l'un par rapport à l'autre et/ou pour déterminer les positions des râteaux (6, 7) sur l'au moins un chemin de déplacement.

2. Système de déblayage (2, 2') selon la revendication 1, **caractérisé en ce que** l'ensemble du premier râteau et l'ensemble du deuxième râteau (6, 7) peuvent être déplacés en translation le long du pont (3) .

3. Système de déblayage (2, 2') selon la revendication 1, **caractérisé en ce que** chacun des deux entraînements de râteau distincts (14, 15) est muni d'un capteur (25, 26) destiné à déterminer la consommation électrique.

4. Système de déblayage selon la revendication 3, **caractérisé en ce qu'**il est prévu un dispositif de commande et de régulation (27) qui est relié aux deux capteurs (25, 26) pour évaluer la consommation électrique déterminée des deux entraînements de râteau (14, 15).

5. Système de déblayage (2, 2') selon la revendication 4, **caractérisé en ce qu'**un entraînement de pont (28) est prévu pour déplacer le pont (3), lequel est relié au dispositif de commande et de régulation (27) pour adapter la vitesse du pont (3) en fonction de la consommation électrique déterminée des deux entraînements de râteau (14, 15).

6. Système de déblayage (2, 2') selon la revendication 4, **caractérisé en ce que** les deux entraînements de râteau (14, 15) sont reliés au dispositif de commande et de régulation (27) pour adapter la vitesse de l'un au moins des deux entraînements de râteau (14, 15) en fonction de la consommation électrique déterminée de ces entraînements de râteau (14, 15).

7. Procédé de désempilage de matériau en vrac d'un dépôt de matériau en vrac, au moins deux râteaux (6, 7) disposés l'un à côté de l'autre sur un pont mobile (3) venant en engagement avec une surface d'attaque (1a) du dépôt de matériaux en vrac (1) lors du désempilage du matériau en vrac du dépôt de matériau en vrac et le pont (3) est déplacé dans la direction longitudinale du pont (3) sur au moins un chemin de déplacement, **caractérisé en ce que** chaque râteau (1, 7) est déplacé dans la direction longitudinale du pont (3) par le biais d'un entraînement de râteau (14, 15) pouvant être commandé séparément et les positions des deux râteaux (6, 7) l'un par rapport à l'autre et/ou les positions des deux râteaux (6, 7) sur l'au moins un chemin de déplacement sont déterminées et utilisées pour commander les deux entraînements de râteau (14, 15).

8. Procédé selon la revendication 7, **caractérisé en ce que** la consommation électrique des deux entraînements de râteau (14, 15) est déterminée et évaluée.

9. Procédé selon la revendication 7, **caractérisé en ce que** le pont (3) est mobile à une vitesse d'avance qui est régulée en fonction de la consommation électrique évaluée des deux entraînements de râteau (14, 15).

10. Procédé selon la revendication 7, **caractérisé en ce que** la vitesse d'au moins un râteau (6, 7) est adaptée à la consommation électrique mesurée de ce râteau (14, 15).

11. Procédé selon la revendication 7, **caractérisé en ce que** la vitesse d'un râteau (6) par rapport à la vitesse de l'autre râteau est ajustée en fonction de la distance entre les deux râteaux (6, 7).
